# EUROPEAN PATENT APPLICATION

(11) **EP 4 424 905 A1**
(43) Date of publication of application: **04.09.2024**
(21) Application number: 24159207.0
(22) Date of filing: 22.02.2024
(51) Int. Cl.: D06N 3/00, D06N 5/00

(54) **BITUMINOUS TILE WITH GRIT COATING AND METHOD FOR THE PRODUCTION THEREOF**

(30) Priority: 23.02.2023 IT 202300000687 U
(71) Applicant: Tegola Canadese Srl, 31029 Vittorio Veneto (TV) (IT)
(72) Inventor: FLOREAN, Luca, 33170 Pordenone (PN) (IT); DRIGO, Michele, 31100 Treviso (TV) (IT)
(74) Representative: Frare, Paolo

(57) **Abstract**

The present finding relates to a bituminous tile (1) with grit coating (13), comprising: - a support layer (2) comprising a base layer (3) made of non-woven glass fiber fabric, having a first major surface (4) to which a glass fiber net (6) is coupled which covers at least 80% of said first major surface (4); - a first external bituminous layer (9) which covers the net (6) and the first major surface (4);
- a second external bituminous layer (10) which covers a second major surface (5) of the base layer (3), facing away from the first major surface (4);
- a grit (13) comprising ceramized colored mineral granules, which covers the second external bituminous layer (10).

The present finding also relates to a method for the production of a bituminous tile (1) with grit coating (13), comprising, in the following order, the following steps: a) providing a support layer (2) comprising a base layer (3) made of non-woven glass fiber fabric, having a first major surface (4), to which a glass fiber net (6) is coupled which covers at least 80% of said first major surface (4), and a second major surface (5) facing away from the first major surface (4); b) impregnating the support layer (2) with a hydrocarbon solution comprising adhesion promoters, at a temperature comprised between 120-180°C; c) covering the support layer (3), impregnated with the hydrocarbon solution comprising adhesion promoters, with a non-adhesive bituminous compound, at a temperature comprised between 170-210°C, to define a first external bituminous layer (9) which covers the net (6) and the first major surface (4), and a second external bituminous layer (10) which covers the second major surface (5) ; d) depositing a grit (13) containing ceramized colored mineral granules on the second external bituminous layer (10), when the same has a temperature comprised between 120-170°C; e) cutting the support layer (2) covered with the first and second external bituminous layer (9, 10) and with the grit (13) to obtain from it a desired number of tiles (1).

## Description

The present finding refers to a bituminous tile with grit coating (also referred to as "gritted" bituminous tile) and to a method for the production thereof.

In the construction industry, so-called "gritted" bituminous tiles are known, consisting of a support layer consisting of a glass veil sheet (that is a non-woven fabric made of glass fibers, also referred to as "glass veil"), or of organic material, treated with adhesion promoters and impregnated by a bituminous coating, then covered by a grit consisting of ceramized colored mineral granules.

It is underlined that in the present text the expression "ceramized colored mineral granules" means mineral granules coated by an inorganic coating colored by inorganic oxides which, after coating, have undergone a high temperature cooking process (400-600°C).

Furthermore, it is underlined that some ceramized colored mineral granules, subsequently to cooking and their cooling, can undergo further treatments to acquire hydrophobic properties and/or improve the adhesion to the bituminous coating.

Such known-type tiles are typically installed on building roofs to provide protection from atmospheric elements and to confer an aesthetically pleasing appearance to the roof through different colors and forms.

The known solutions for the production of such known-type tiles provide that a support layer consisting of a glass veil (or of an organic material) continuous sheet is passed through a coating device containing a hot bituminous compound; passing through such coating device, the sheet is impregnated by the bituminous compound.

Then, in order to protect the bituminous material from atmospheric agents and ultraviolet rays, the impregnated sheet is superficially sprinkled with a grit consisting of ceramized colored mineral granules.

After covering with the grit, the continuous sheet undergoes a cutting step, wherein it is divided in the single tiles.

Such known-type tiles are generally applied to a covering structure (for example the roof) of a building by nails which are driven in dedicated zones of the tile, referred to as "nailing zones", and are then stuck in the underlying covering structure, forming a mechanical interconnection between the latter and the tile.

However, the puncture of the tile operated by the nails can cause the tile itself to weaken, resulting in the risk that the tile breaks, particularly in the presence of strong winds.

The risk of breaking the tile appears, in addition to the nailing zones, also at the so-called "pitch", that is the front zone of the tile which, once the tile is installed on the building cover, depending on the position of the tile, protrudes from the cover itself, or is positioned to partially cover another underlying tile; indeed, the pitch is the part of the tile most exposed to the action of the wind, which, if strong enough, can bend such pitch and generate a weakening of the material which compromises the mechanical properties and the stress strength (in addition to the overall aesthetic of the roof) thereof, with the risk that the tile can break and/or be detached from the covering structure.

Therefore, the main aim of the present finding is to obtain a bituminous tile with grit coating which optimally resists to external stresses, and therefore has a reduced risk of breaking.

In the scope of such aim, an object of the present finding is to obtain a tile wherein the risk of separation between the support layer and the bituminous layers is reduced.

Another object of the finding is to obtain a bituminous tile with grit coating which provides the installer with a wide nailing zone.

Still another object is to obtain a bituminous tile with grit coating which achieves the above-mentioned aim and objects meanwhile maintaining aesthetical features comparable to those of the known-type tiles.

The aim and objects according to the present finding are achieved by a bituminous tile with grit coating, comprising:
- a support layer comprising a base layer made of non-woven glass fiber fabric, having a first major surface to which a glass fiber net is coupled which covers at least 80% of such first major surface;
- a first external bituminous layer which covers the net and the first major surface;
- a second external bituminous layer which covers a second major surface of the base layer, facing away from the first major surface;
- a grit comprising ceramized colored mineral granules, which covers the second external bituminous layer.

It should be noted that, in the present text, saying that the net covers a certain percentage of the major surface of the first layer, means that the net extends on such major surface such that the area delimited by the perimeter which envelops, in a plan view, such net, covers such percentage of the major surface; for example, saying that the net covers at least 80% of the major surface means that the net extends on such major surface such that the area delimited by the perimeter which envelops, in a plan view, such net, covers at least 80% of the major surface.

Furthermore, in the present text, unless otherwise specified, saying that a layer covers another layer (or a support) does not imply that a further layer is not present between such layers (or between layer and support).

Other advantageous features of the tile according to the finding are reported in the dependent claims.

The aim and objects according to the present finding are also achieved by a method for the production of a bituminous tile with grit coating, comprising, in the following order, the following steps:
a) providing a support layer comprising a base layer made of non-woven glass fiber fabric, having a first major surface, to which a glass fiber net is coupled which covers at least 80% of said first major surface, and a second major surface facing away from the first major surface;
b) impregnating the support layer with a hydrocarbon solution comprising adhesion promoters, at a temperature comprised between 120-180°C;
c) covering the support layer, impregnated with the hydrocarbon solution comprising adhesion promoters, with a non-adhesive bituminous compound, at a temperature comprised between 170-210°C, to define a first external bituminous layer which covers the net and the first major surface, and a second external bituminous layer which covers the second major surface;
d) depositing a grit containing ceramized colored mineral granules on the second external bituminous layer, when the same has a temperature comprised between 120-170°C;
e) cutting the support layer covered with the first and second external bituminous layers and with the grit, to obtain from it a desired number of tiles.

Advantageously, the method according to the finding comprises, between step b) and step c), the following step:
b1) pre-impregnating the support layer, impregnated with the hydrocarbon solution comprising adhesion promoters, with a modified bituminous compound, at a temperature comprised between 170-210°C, to define a first intermediate bituminous layer, which covers the first major surface and the net and is then covered by the first external bituminous layer in step c), and a second intermediate bituminous layer, which covers the second major surface and is then covered by the second external bituminous layer in step c).

Advantageously, the method according to the finding comprises, subsequently to step c) and before step e), the following step:
f) applying an adhesive bituminous compound on top of the first external bituminous layer, to form an adhesive bituminous layer.

Advantageously, the method according to the finding comprises, after step f) and before step e), the following step:
f2) applying on the adhesive bituminous layer a non-stick layer, which covers at least partially the adhesive bituminous layer, facing away from the support layer.

Advantageously, the method according to the finding comprises, after step d) and before step e), the following step:
d1) applying, on top of the second external bituminous layer covered with the grit, one or more first portions of adhesive bituminous compound.

The features and advantages of the present finding will be more apparent from the following exemplary and non-limiting description, referred to the attached schematic drawings wherein:
- figure 1 schematically illustrates, in an exploded perspective view, a portion of an advantageous embodiment of a tile according to the finding;
- figure 2 schematically illustrates, in a plan view, an advantageous embodiment of a support layer of a tile according to the finding;
- figure 3 schematically illustrates, in a plan view, a further advantageous embodiment of a support layer of a tile according to the finding;
- figure 4 schematically illustrates, in a plan view, an advantageous embodiment of a net of a support layer of a tile according to the finding;
- figure 5 schematically illustrates an advantageous embodiment of a scheme of a production line of a first embodiment of tile according to the finding;
- figure 6 schematically illustrates a further advantageous embodiment of a scheme of a production line of a first embodiment of tile according to the finding;
- figure 7 schematically illustrates an advantageous embodiment of a production line of a second embodiment of tile according to the finding;
- figure 8 schematically illustrates a further advantageous embodiment of a production line of a second embodiment of tile according to the finding;
- figure 9 is a top plan view of a first embodiment of tile according to the finding;
- figure 10 is a bottom plan view of the tile of figure 9;
- figure 11 is a side view, partially sectional, of two tiles partially overlapping each other, fixed to each other by nailing;
- figure 12 is a top plan view of two tiles partially overlapping each other, fixed to each other by nailing;
- figure 13 is a top plan view of two first and two second bands of a further embodiment of tile according to the finding, during the process for producing the tile;

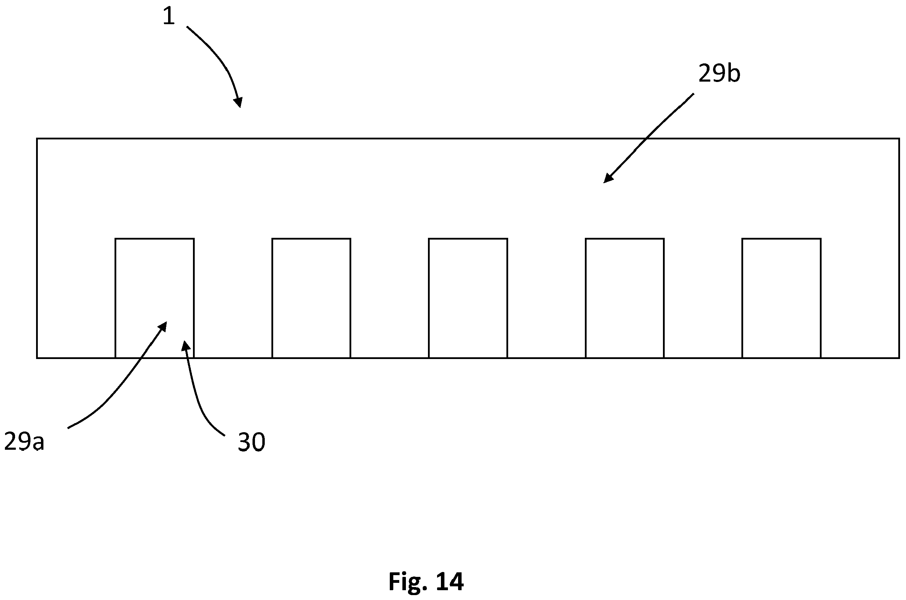

- figure 14 is a top plan view of a further embodiment of tile according to the finding.

With reference to the attached figures, a bituminous tile with grit coating, according to the finding, is overall indicated by number 1.

According to the finding, the tile 1 comprises a support layer 2 comprising a base layer 3 made of non-woven glass fiber fabric (also referred to as "glass veil", or "veil glass"), having a first major surface 4, and a second major surface 5 facing away from the first major surface 4.

Advantageously, the glass veil comprises very thin glass fibers (advantageously having a diameter lower than hundredth of a millimeter), having an advantageously variable length (advantageously comprised in the range of 10-40 mm), evenly distributed and heat-sealed by particular polymer-based binders (which preferably form 15-35% of the total mass), to form a planar and homogeneous non-woven fabric, which is preferably wound and distributed in coils having variable width and length.

The glass veil is advantageously classified according to the mass per unit area, varying from 30 to 150 g/m², and according to the width.

Due to the reduction of the glass fibers, the mechanical tensile strength of the material, as the crystallization defects (for example micro-fractures, presence of air, etc.) are reduced.

Furthermore, the chemical composition of the material (almost entirely consisting of silicon dioxide, SiO2) determines a high heat and flame resistance, attributing a dimensional stability up to temperatures close to 500-700°C.

According to the finding, the support layer 2 also comprises a glass fiber net 6, coupled to the first major surface 4 of the base layer 3, which covers at least 80%, more preferably 100%, of such first major surface 4.

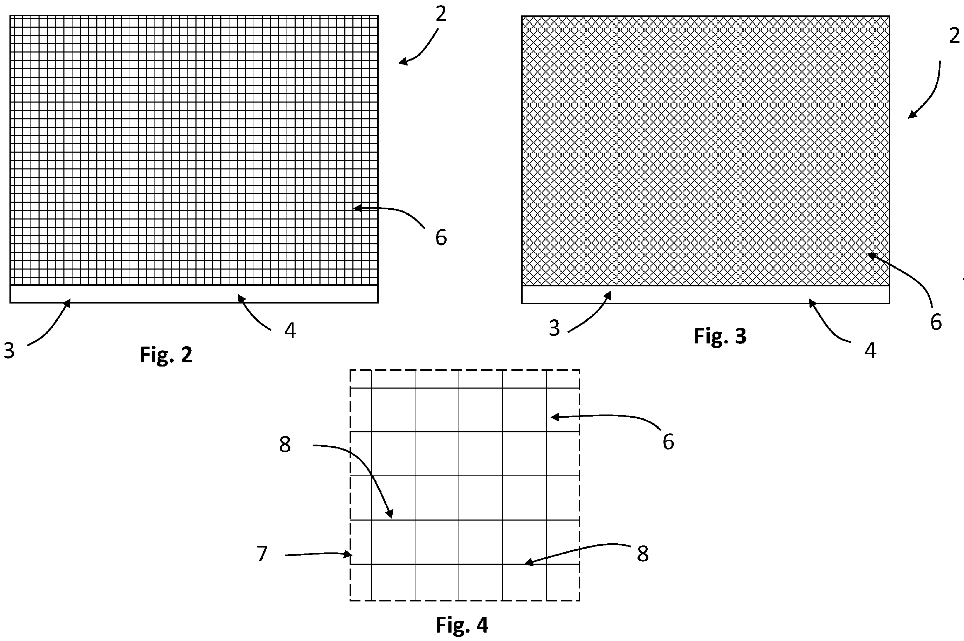

It should be noted that in the present text, saying that the net 6 covers a certain percentage of the first major surface 4 of the base layer 3, means that the net 6 extends on such first major surface 4 such that the area delimited by the perimeter, illustrated in figure 4 by a dashed line 7, which envelops, in a plan view, such net 6, covers such a percentage of the first major surface 4; for example, saying that the net 6 covers at least 80% of the first major surface 4, means that the net 6 extends on such first major surface 4 such that the area delimited by the perimeter 7 which envelops, in a plan view, such net 6, covers at least 80% of the first major surface 4.

Joining the base layer 3 to the net 6 confers to the support layer 2 a high tensile strength, high mechanical properties and dimensional stability, lightness, evenness, chemical inertness, and heat resistance.

Advantageously, the fact that the net covers at least 80% of the first major surface 4 of the base layer 3 ensures that the support layer 2, comprising the base layer 3 and the net 6, has a high tensile strength, high mechanical properties, dimensional stability, lightness, evenness, chemical inertness, and heat resistance, for most of its extension, so that the tile 1 composed by it can optimally resist to the external stresses, therefore having a reduced risk of breaking.

Advantageously, the net 6 comprises meshes 8, preferably square or rectangular, defined by a warp and a weft of glass fiber monofilaments, preferably two-by-two parallel and spaced from each other, more preferably spaced from each other by 1-6 mm.

Such net 6 is preferably coupled to a base layer 3, preferably made of glass veil, more preferably of the 30-80 g/m² type, advantageously by using polymeric binders (for example styrene-butadiene, polyvinylchloride, etc.) which also confer a greater compatibility to the bitumen by which, as will be explained in the following, the support layer 2 is covered.

In an advantageous embodiment, such as for example that illustrated in the attached figures, the base layer 3 has, in a plan view, a substantially rectangular or square shape.

In an advantageous embodiment, such as for example that illustrated in figure 2, the base layer 3 has, in a plan view, a substantially rectangular or square shape, the net 6 has square or rectangular meshes 8, and the sides of the meshes 8 of the net 6 are two-by-two parallel, respectively, to two sides parallel to each other of the base layer 3.

In a further advantageous embodiment, such as for example that illustrated in figure 3, the base layer 3 has, in a plan view, a substantially rectangular or square shape, the net 6 has square or rectangular meshes 8, and the sides of the meshes 8 of the net 6 are neither parallel nor perpendicular to the sides of the base layer 3; more preferably, in such advantageous embodiment, the sides of the meshes 8 of the net 6 are tilted by 45 degrees with respect to the sides of the base layer 3.

It was observed that, with respect to the embodiment of figure 2, a reciprocal positioning between the meshes 8 of the net 6 and the base layer 3 as that illustrated in the advantageous embodiment of figure 3, allows to obtain a greater strength of the tile 1 to the mechanical stresses, particularly to the bending around axes parallel to the sides of the base layer 3, and to the laceration determined according to a nail test (EN12310-1).

Advantageously, the tile 1 comprises a first external bituminous layer 9 which covers, advantageously entirely, the net 6 and the first major surface 4, and a second external bituminous layer 10 which covers, advantageously entirely, the second major surface 5 of the base layer 3.

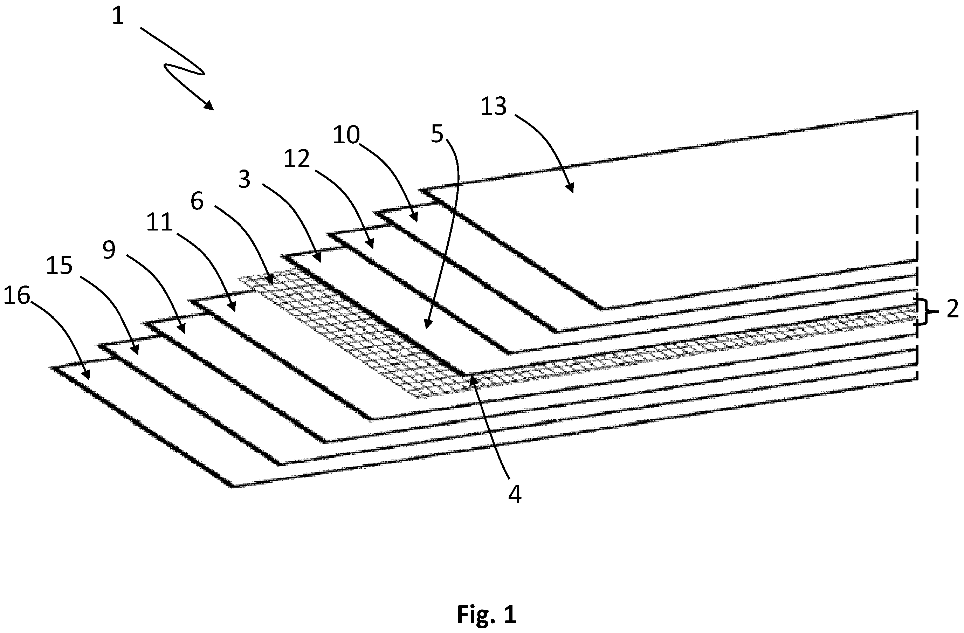

Advantageously, the tile 1 comprises a grit 13 (schematically represented in figure 1 as a continuous layer, even if in reality it is a plurality of granules), advantageously comprising ceramized colored mineral granules, which covers the second external bituminous layer 10; such grit 13 will be better described in the following.

In an advantageous embodiment, the first external bituminous layer 9 and the second external bituminous layer 10 comprise oxidized bitumen or distilled bitumen, advantageously of the industrial type, modified with polymers (for example low-density polyethylene, LDPE, linear low-density polyethylene, LLDPE, isotactic polypropylene, IPP), one or more fluxes/plasticizers, one or more adhesion promoters and one or more mineral fillers.

In an advantageous embodiment, the first external bituminous layer 9 and the second external bituminous layer 10 can advantageously consist of a bituminous compound having the following composition:
oxidized bitumen: 30-60 %m/m
fluxes/plasticizers: 0.1-1.0 %m/m
adhesion promoters: 0.1-0.8 %m/m
calcium carbonate: 20-50 %m/m

It should be noted that in the present text the unit of measurement "%m/m" indicates the ratio, expressed in percentage, between the mass of the component and the total mass of the compound.

It was verified that such composition allows to obtain the following chemical-physical features:
softening point R&B (°C): 110-135
penetration at 25°C (dmm): 9-14
penetration at 60°C (dmm): 30-55
viscosity 12 rpm, 180°C (cP): 5500-9000
specific weight (g/cm³) : 1.20-1.70

Such parameters characterize the properties of the bituminous compound that is its softening point (R&B), its hardness (expressed as penetration, in *tenths of a millimeter "dmm",* at 25°C and 60°C in loading conditions), its viscosity at 180°C and its specific weight.

In a further advantageous embodiment, the first external bituminous layer 9 and the second external bituminous layer 10 can consist of a bituminous compound having the following composition:
industrial distilled bitumen 70/100:30-60 %m/m
LDPE/LLDPE: 10-18 %m/m
IPP: 2-15 %m/m
flux: 0.1-2 %m/m
adhesion promoter: 0.1-0.8 %m/m
calcium carbonate: 20-50 %m/m

It was verified that such composition allows to obtain the following chemical-physical features:
softening point R&B (°C): 120-145
penetration at 25°C (dmm): 12-28
penetration at 60°C (dmm): 50-85
viscosity 12 rpm, 180°C (cP): 6000-9500
specific weight (g/cm³) : 1.20-1.500

Advantageously, the grit 13 is a ceramized colored mineral grit, preferably having a granulometry comprised between 0.3 - 2 mm. The mineral material (for example basalt or slate) is advantageously colored with inorganic pigments, advantageously through a high temperature (400-600°C) ceramization process and, preferably, subsequently treated by some substances functional to the desired properties (for example dust-proof substances, adhesion promoters, hydrophobic substances, photocatalytic or antifouling additives, etc.).

In order to be applied to bituminous sublayers, the mineral colored grit needs to have adhesive features with respect to the sublayer; preferably, for this purpose, the mineral is advantageously treated by a hydrocarbon oil (and/or mineral and/or mixtures) containing an adhesion promoter (for example phosphate/silane esters of ethoxylated fat acids) and subjected to a hydrothermal process with a silicon/silane (or organ-silane)/siloxane-based hydrophobic additive.

Together with the hydrophobic additive, the adhesion promoters further increase the interaction between the basaltic grit and the bitumen, forming strong and durable chemical interactions, and reducing the dust content in the production process.

The hydrophobising hydro-thermal process directly connects to the mineral sublayer of the bitumen the organ-silanes/siloxanes/silicones (present in reduced percentage), ensuring a permanent hydrophobicity resistant to environmental (such as for example ULTRAVIOLET-VIS radiations, temperature, humidity) and mechanical stresses.

Preferably, between the first major surface 4 and the first external bituminous layer 9 a first intermediate bituminous layer 11 is interposed, having a different composition from that of the first external bituminous layer 9, which covers the first major surface 4 and the net 6, and is in turn covered by the first external bituminous layer 9.

Advantageously, between the second major surface 5 and the second external bituminous layer 10, a second intermediate bituminous layer 12 is interposed, having a different composition from that of the second external bituminous layer 10, which covers the second major surface 5, and is in turn covered by the second external bituminous layer 10.

Advantageously, but not necessarily, the composition of the second intermediate bituminous layer 12 is the same of the first intermediate bituminous layer 11.

In an advantageous embodiment, the first intermediate bituminous layer 11 and/or the second intermediate bituminous layer 12 comprise oxidized bitumen or distilled bitumen modified with polymers, one or more fluxes/plasticizers, one or more adhesion promoters and one or more mineral fillers; such components are different and/or present in percentages different from those present in the first external bituminous layer 9 and the second external bituminous layer 10.

It should be noted that the fluxes /plasticizers present in the first external bituminous layer 9 and the second external bituminous layer 10 and, in different compositions and/or percentages, in the possible first intermediate bituminous layer 11 and/or second intermediate bituminous layer 12, are products having the property of reducing the viscosity of the bituminous compound, and therefore ensuring that such compound covers more easily a certain bituminous layer or the support layer 2, reducing the risk of delamination (or mutual separation of the layers), and separation between the granules of the grit and the bitumen.

The most advantageous fluxes/plasticizers for applying in the finding (both for the first external bituminous layer 9 and the second external bituminous layer 10 and, in different compositions and/or percentages, for the possible first intermediate bituminous layer 11 and second intermediate bituminous layer 12) comprise olefins and/or mineral or synthetic hydrocarbon mixtures such as, for example, polyalkylbenzenes and phosphate/silane esters of ethoxylated fat acids. Dosing such components can range from 0.01% to 2% referred to the bitumen mass.

Linear polyalkylbenzenes are materials deriving from the polymerization of alkylbenzenes, or monomers containing an aromatic part and an aliphatic part. In the case of bituminous mixtures, the polyalkylbenzenes are added to the formulation at the temperature of about 150-170°C, or when the bitumen is in its liquid form. However, their function is performed at low temperatures since it improves workability and flexibility. Polyalkylbenzenes can be used as pure, but more preferably are used in mixture.

The one or more adhesion promoters added to the bituminous compound (both of the first external bituminous layer 9 and the second external bituminous layer 10, and, in different compositions and/or percentages, of the possible first intermediate bituminous layer 11 and second intermediate bituminous layer 12) have the main effect of reducing the contact angle bitumen/grit 13, and bitumen/support layer 2, respectively. A smaller contact angle promotes the bitumen in adhering to the surface of the grit 13 and/or to the support layer 2, facilitates the wettability of the fine parts, and especially facilitates the bitumen in entering the microscopic pores present on the surface of the support layer 2 and of the grit 13.

The one or more adhesion promoters can consist of, or comprise, phosphate/silane esters of ethoxylated fat acids and/or polyalkylpolyamines, polyalkylimidazolines, polyalkylamidoamines of fat acids (dosing the same can advantageously range from 0.01% to 1% referred to the bitumen mass).

Advantageously, the one or more mineral fillers are added to the composition of the bituminous layers (both of the first external bituminous layer 9 and the second external bituminous layer 10, and, in different compositions and/or percentages, of the possible first intermediate bituminous layer 11 and second intermediate bituminous layer 12) both to confer the desired mechanical properties to the finite product and to reduce the costs in using raw materials.

Advantageously, the calcium carbonate (CaCO3), advantageously present in the bituminous compound at 30-65% by weight (with different percentages in the case of first external bituminous layer 9 and second external bituminous layer 10, and of possible first intermediate bituminous layer 11 and second intermediate bituminous layer 12) can be used as a mineral filler; the calcium carbonate is used as a rheology modifier, as a heat sink, improves the impact strength and the dimensional stability of the finite product over time. In addition to calcium carbonate, perlite, mica, talc, and/or other mineral particulates can be used as a mineral filler.

In an advantageous embodiment, the first intermediate bituminous layer 11 and/or the second intermediate bituminous layer 12 are composed by a modified bituminous compound having the following composition:
oxidized bitumen: 30-60 %m/m
fluxes/plasticizers: 0.2-1.5 %m/m
adhesion promoters: 0.1-1 %m/m
calcium carbonate: 20-45 %m/m

It was verified that such composition allows to obtain the following chemical-physical features:
softening point (°C): 100-135
penetration at 25°C (dmm): 8-20
penetration at 60°C (dmm): 25-50
viscosity 12 rpm, 180°C (cP): 3000-6700
specific weight (g/cm³) : 1.20-1.70

In a further advantageous embodiment, the first intermediate bituminous layer 11 and/or the second intermediate bituminous layer 12 are composed by a modified bituminous compound having the following composition:
industrial distilled bitumen 70/100:30-60 %m/m
LDPE/LLDPE: 10-18 %m/m
IPP: 2-15 %m/m
flux: 0.2-2 %m/m
adhesion promoter: 0.2-1 %m/m
calcium carbonate: 20-50 %m/m

It was verified that such composition allows to obtain the following chemical-physical features:
softening point (°C): 120-150
penetration at 25°C (dmm): 15-35
penetration at 60°C (dmm) 50-100
viscosity 12 rpm, 180°C (cP): 2500-7700
specific weight (g/cm³): 1.20-1.50

Advantageously, in order to increase its compatibility with the bitumen and create strong and durable bindings between the support layer 2 and the bituminous compound of the layer which is applied in contact with such support layer 2 (for example the possible first intermediate bituminous layer 11 and/or the possible second intermediate bituminous layer 12), before applying such bituminous layer, the support layer 2 is treated by a hot solution of linear and/or branched polyalkylbenzenes. Advantageously, some polymers, such as styrene-butadiene-styrene (SBS) rubber and/or isotactic polypropylene (IPP) in small percentages (0.5-2%), and adhesion promoters (0.1-1%) can be also dissolved into such solution. Paraffinic oils, naphthenic oils, and mineral oils can be used as an alternative to the linear/branched polyalkylbenzenes.

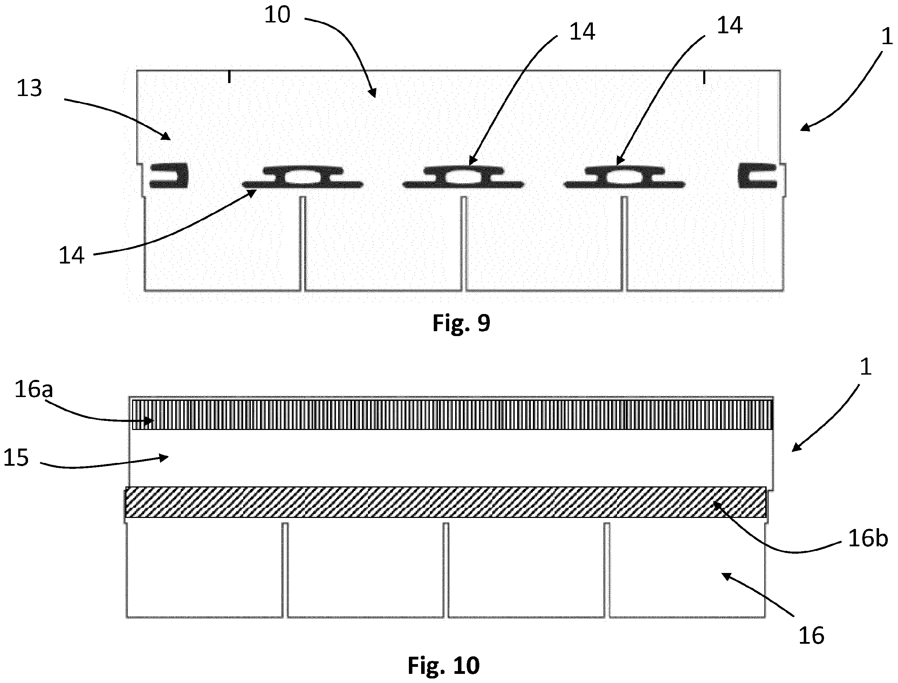

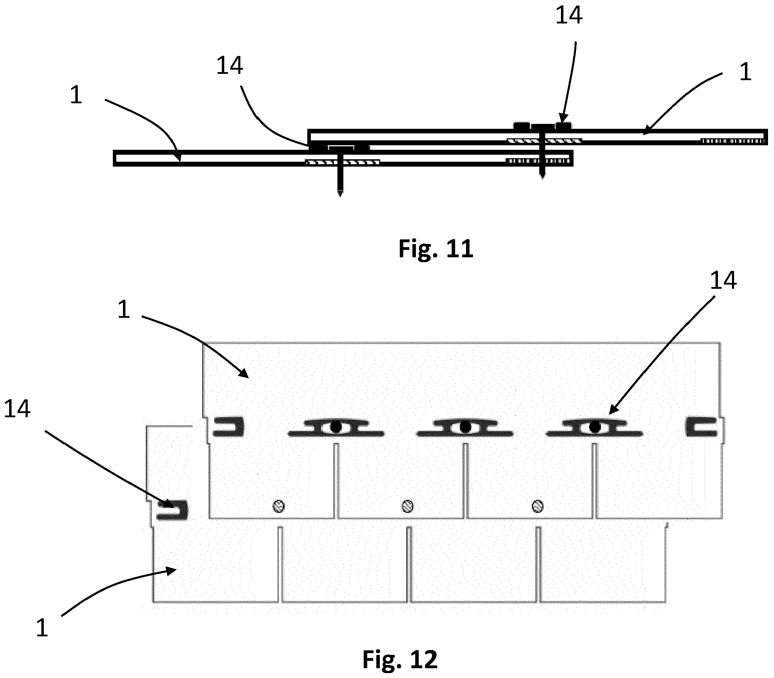

In advantageous embodiments, such as for example those illustrated in attached figures 9, 11 and 12, the tile 1 comprises one or more first portions 14 of adhesive bituminous compound (also referred to as "pads" below), applied for example on top of the second external bituminous layer 10 covered with the grit 13, suitable to glue to the bottom of a further tile 1 positioned on top of the second external bituminous layer 10 covered with the grit 13 on which such one or more first portions or pads 14 are present.

In an advantageous embodiment, the tile 1 comprises an adhesive bituminous layer 15 which covers the first external bituminous layer 9, for its entire extension or part thereof.

Advantageously, the adhesive bituminous layer 15 is formed in an adhesive bituminous compound obtained by adding to distilled bitumen, preferably of the industrial type, aliquots of different polymers such as for example styrene-butadiene-styrene (SBS) and resins. Advantageously, the resins can be of a modified aliphatic hydrocarbon, aromatic hydrocarbon, or aliphatic-aromatic hydrocarbon nature, or thermoplastic resins which provide adhesive properties to the finite product.

In an advantageous embodiment, the adhesive bituminous compound of the adhesive bituminous layer 15 can have the following composition:
industrial bitumen 70/100: 50-98 %m/m
styrene-butadiene-styrene (SBS): 1-15 %m/m
aromatic resin: 1-15 %m/m

It was verified that such composition allows to obtain the following chemical-physical features:
softening point (°C): 65-98
penetration at 25°C (dmm): 45-90
viscosity 12 rpm, 180°C (cP) > 400
specific weight (g/cm³) 1.1-1.5

Such parameters characterize the properties of the bituminous compound, or its softening point (R&B), its hardness (expressed as the penetration at 25°C and 60°C in loading conditions), its viscosity at 180°C and its specific weight.

In advantageous embodiments, such as for example those illustrated in figures 9 to 12, the tile 1 also comprises a non-stick layer 16, fixed to cover the adhesive bituminous layer 15, facing away from the support layer 2, suitable to prevent the tile 1 from gluing to a further underlying tile 1 according to the finding, for example when storing and/or transporting a plurality of tiles 1 according to the finding stacked on top of each other.

Advantageously, the non-stick layer 16 is removable, so that it can be removed when the tile 1 is installed.

Advantageously, the non-stick layer 16 can consist of, or comprise, silica sand, or other non-stick material, such as for example silicone polymer tape.

Advantageously, the non-stick layer 16 can affect the entire surface of the adhesive bituminous layer 15, or only one or more regions of the same; in advantageous embodiments, such as for example that illustrated in figure 10, the non-stick layer advantageously comprises one or more silicone tapes 16a, 16b, preferably parallel to each other and to two sides parallel to each other of the tile 1, applied on the adhesive bituminous layer 15.

Different embodiments of a method for obtaining different embodiments of tile 1 according to the finding are described below.

The method for the production of a tile 1 according to the finding firstly comprises the step of providing a support layer 2 comprising a base layer 3 made of non-woven glass fiber fabric, having a first major surface 4, to which a glass fiber net 6 is coupled which covers at least 80%, preferably 100%, of the first major surface 4, and a second major surface 5 facing away from the first major surface 4.

Such support layer 2, in the form of a continuous tape, is advanced in a production line 100, provided with dedicated rollers 18 which allow such support layer 2 to be advanced, to the final station of the production line 100, wherein such support layer 2, suitably treated and coated, as will be better explained in the following, is cut to form one or more tiles 1.

The width of the support layer 2 depends on the typology of tile 1 to be produced; preferably, such width is comprised between 900-1400 mm.

Advantageously, the width of the support layer 2 is such as to allow four tiles 1 to be simultaneously formed.

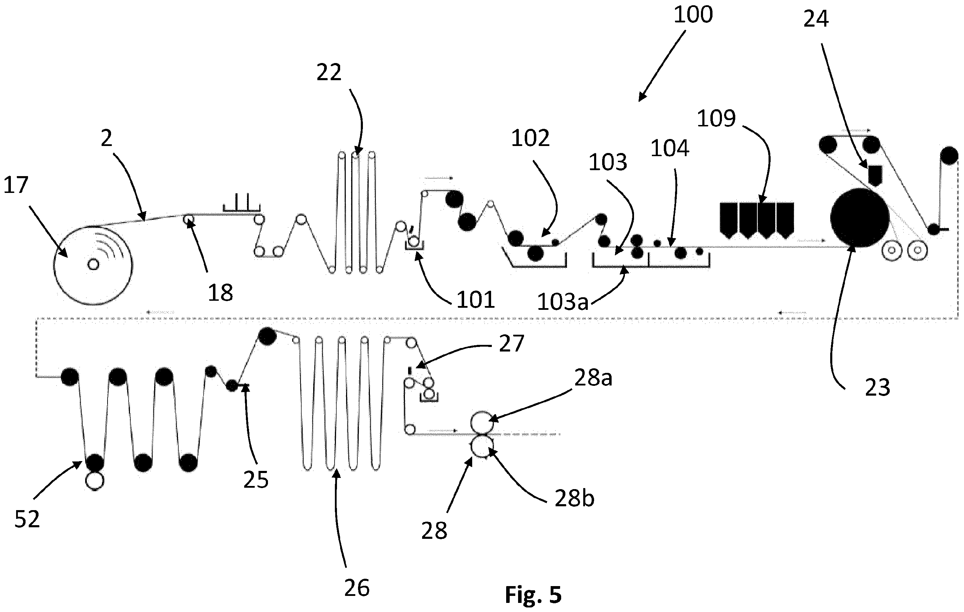

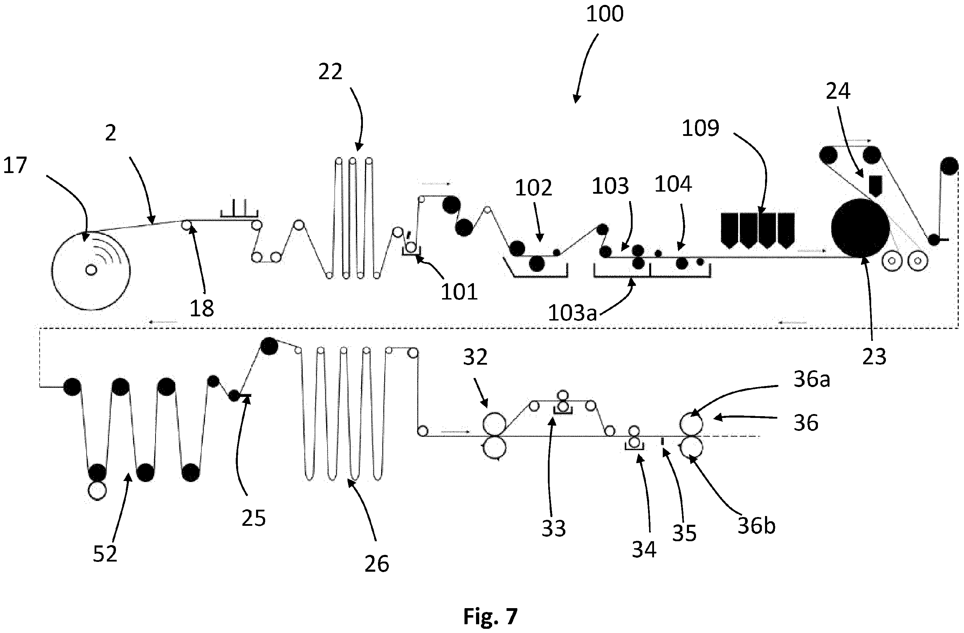

In advantageous embodiments, such as for example those illustrated in figure 5 and in figure 7, the support layer 2, already formed (or pre-formed), is initially wound in a first coil 17, and is unwound by the same by advancing it on the rollers 18, so as to subject it, when advancing it, to the different steps of the method according to the finding.

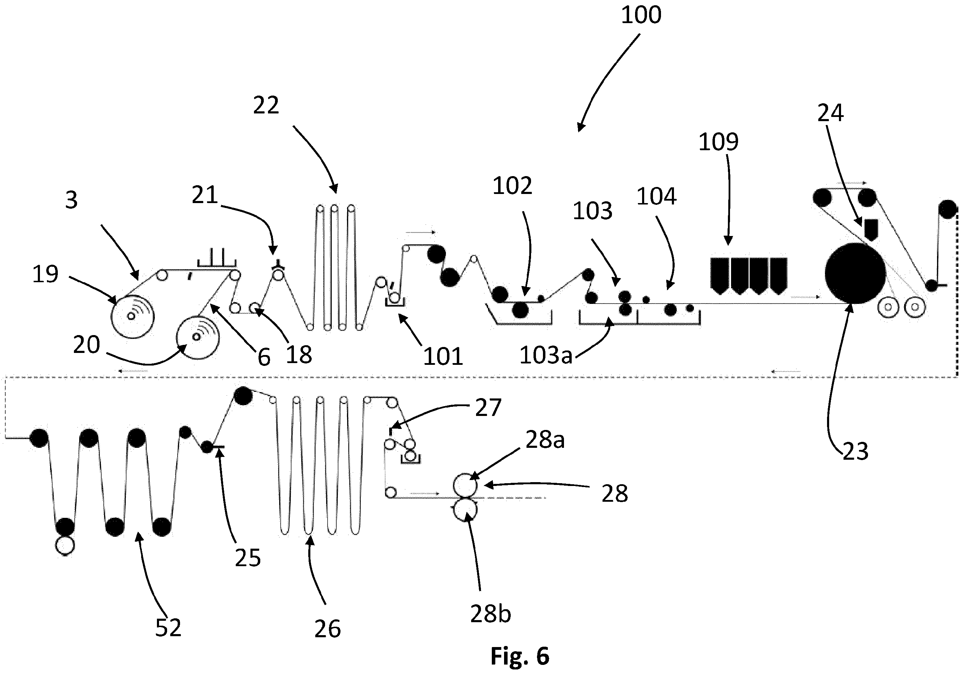

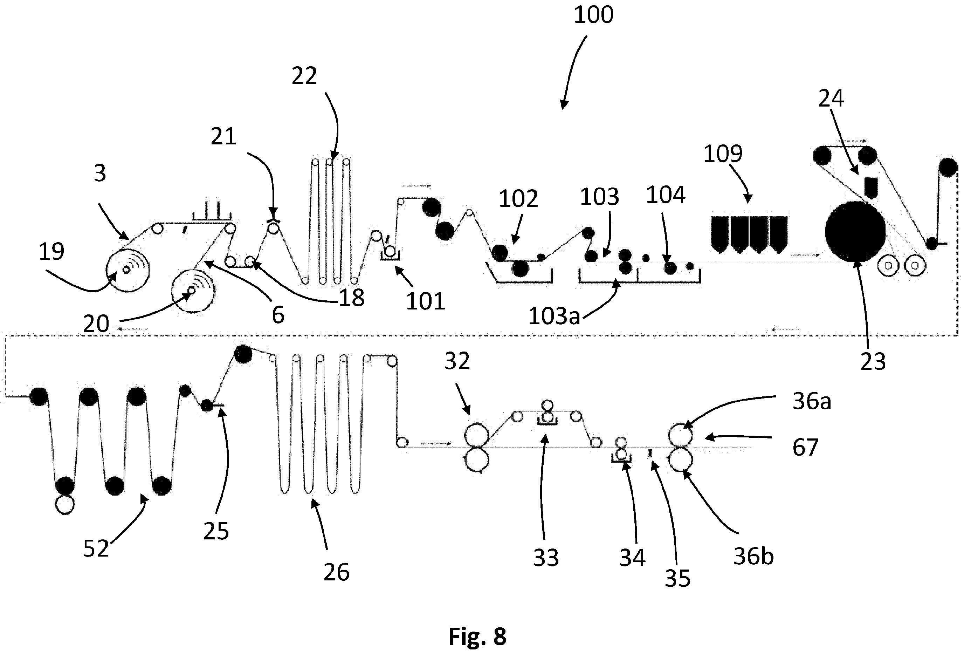

In other advantageous embodiments, such as for example those illustrated in figures 6 and 8, the support layer 2 is obtained, advantageously directly in the production line 100, by coupling the base layer 3 and the net 6 to each other.

In such advantageous embodiment, the base layer 3 is preferably initially wound in a second coil 19, and the net 6 is preferably initially wound in a third coil 20.

The base layer 3 and the net 6 are unwound from the respective coil and advanced in the rollers 18 of the production line 100; after the base layer 3 is advantageously pre-treated by a polymer-based binder, the base layer 3 and the net 6 advantageously arrive to a thermal calender 21, advantageously provided in the production line 100, wherein are permanently joined to each other, preferably by a thermal calendering process, at a temperature advantageously comprised between 120-230°C.

Thermal calendering also promotes the elimination of the intrinsic humidity of the material, which could create problems of incompatibility with the bitumen and/or damaging of the finite product.

After thermal calendering, the support layer 2 thus obtained continues to advance on the rollers 18 of the production line 100, so as to subject it, when advancing it, to the different steps of the method according to the finding.

Advantageously, the method according to the finding provides that the support layer 2 (pre-formed, or obtained, preferably by thermal calendering, directly in the production line 100) is passed through a first accumulator 22 in order to ensure the continuity of the production process even when, for example, there is the need to replace or recharge the coils which, depending on the embodiment, contain the pre-formed support layer 2, or the base layer 3 and the net 6.

Then (whether or not there is the first accumulator 22), the support layer 2, advantageously in a pre-treating station 101, is preferably impregnated with a hydrocarbon solution comprising adhesion promoters, more preferably at a temperature of 120-180°C, and further heated at a temperature of 80-130°C.

In advantageous embodiments, the support layer 2, preferably impregnated with the hydrocarbon solution comprising adhesion promoters, is brought to a pre-impregnating station 102, wherein it is covered with a modified bituminous compound, preferably at a temperature comprised between 170-200°C, to define a first intermediate bituminous layer 11, which covers the first major surface 4 and the net 6, and a second intermediate bituminous layer 12, which covers the second major surface 5.

In advantageous embodiments, the support layer 2, preferably impregnated with the hydrocarbon solution comprising adhesion promoters, and advantageously impregnated with the modified bituminous compound, to define the first intermediate bituminous layer 11 and the second intermediate bituminous layer 12, is brought to an impregnating station 103, where it is covered with a non-adhesive bituminous compound, preferably at a temperature comprised between 170-210°C, to define a first external bituminous layer 9 which covers the first intermediate bituminous layer 11, and a second external bituminous layer 10 which covers the second intermediate bituminous layer 12.

In advantageous embodiments, not illustrated, the impregnating station 102 is not provided, and the support layer 2, preferably impregnated with the hydrocarbon solution comprising adhesion promoters, can be advantageously brought directly in the impregnating station 103, where it is covered with the non-adhesive bituminous compound, preferably at a temperature comprised between 170-210°C, to define the first external bituminous layer 9 which directly covers the net 6 and the first major surface 4, and a second external bituminous layer 10 which directly covers the second major surface 5.

Advantageously, possible excess bituminous material is eliminated, for example by dedicated metal scrapers positioned transversally to impregnating tanks 103a present in the impregnating station 103.

Furthermore, the method according to the finding provides whether or not there are the possible first and second intermediate bituminous layers, the step of depositing a grit 13 containing ceramized colored mineral granules on the second external bituminous layer 10, advantageously when the same has a temperature comprised between 120-170°C.

Such impregnation is made by passing the support layer 2, provided with the first external bituminous layer 9 and the second external bituminous layer 10, still hot (advantageously at a temperature comprised between 120-170°C), under some silos 109, which deliver ceramized colored mineral granules having a defined granulometry, which will form the upper layer of the tile 1 and will protect the same from ultraviolet radiations and bad weather (in addition to confer possible further features to the finite tile 1, such as for example an antifouling and/or photocatalytic action). The delivery of the granules can be continuous or alternating, as a function of the grit type 13, the employed colors, and the desired chromatic shades.

Advantageously, the method according to the finding provides a first step of pressing the granules through a first rotating drum 23, preferably resulting in a temporary overturning of the tile 1 to allow the non-adhered and/or excess granules to drop and be recovered for a subsequent application.

In advantageous embodiments, the method according to the finding provides, before applying the grit 13, to apply an adhesive bituminous compound on top of the first external bituminous layer 9, preferably at a temperature comprised between 170-210°C, in a further impregnating station 104, to form the adhesive bituminous layer 15 which covers the first external bituminous layer 9, for its entire extension or part thereof.

In advantageous embodiments, the method according to the finding provides to apply a non-stick layer 16, fixed to cover the adhesive bituminous layer 15, facing away from the support layer 2, suitable to prevent the tile 1 from gluing to a further underlying tile 1 according to the finding, for example when storing and/or transporting a plurality of tiles 1 according to the finding stacked on top of each other.

Such non-stick layer 16 can comprise for example one or more silicone tapes 16a, 16b (for example polymeric tapes made of polyethylene, PE, or polypropylene, PP, one-side-, two-side-, or non-siliconized), which can be fixed to the adhesive bituminous layer 15 for example using the intrinsic adhesivity of hot bitumen.

The non-stick layer 16 can comprise, alternatively, or additionally to the one or more silicone tapes 16a, 16b, a sand layer, for example silica sand, not illustrated, which can be advantageously applied to the adhesive bituminous layer 15 and/or to the bituminous layer 9 through a dispenser 24.

In advantageous embodiments, such as for example those illustrated in attached figures 5 to 8, the method according to the finding can comprise a second step of pressing the support layer 2 covered with the desired bituminous layers and with the grit 13, and possibly with the non-stick layer 16, advantageously performed by pressing rollers 52, advantageously provided in the production line 100.

Advantageously, the method according to the finding can comprise a step of cooling the support layer 2 covered with the desired bituminous layers and with the grit 13, and possibly with the non-stick layer 16, using for example air and/or water jets (with a temperature preferably comprised between 130°C and 50°C), delivered for example by dedicated first nozzles 25, advantageously provided in the production line 100.

Advantageously, the method according to the finding provides a second accumulating step wherein the support layer 2, covered with the desired bituminous layers and with the grit 13, and possibly with the non-stick layer 16, after being cooled is passed through a second accumulator 26, advantageously provided in the production line 100, in order to ensure the continuity of the production process, if there are problems in subsequent cutting section involving the interruption of the cutting process.

In advantageous embodiments, such as for example those illustrated in figures 5 and 6, the method according to the finding provides, after the second accumulating step, the step of applying one or more first portions 14 of adhesive bituminous compound (or "pads"), on top of the second external bituminous layer 10 covered with the grit 13, and then (to inhibit the adhesive power of the first portions 14 when producing the tile 1) the step of cooling such first portions 14, preferably with air and/or a mixture of water and surface-active agents, more preferably delivered by dedicated second nozzles 27.

In advantageous embodiments, such as for example those illustrated in figures 5 and 6, the method according to the finding provides, after the second accumulating step and, if present, after the step of applying one or more first portions 14 of adhesive bituminous compound, the step of obtaining single tiles 1 of the so-called "monolayer" type, by cutting the support layer 2, covered with the desired bituminous layers and with the grit 13, and possibly with the non-stick layer 16 and/or with the first portions 14, by a first rotating cutter 28 (advantageously provided in the production line 100), preferably comprising a first cutting cylinder 28a and a first counter-roller (or supporting roller) 28b, preferably made of rubber or metal; such first cutting cylinder 28a can give the tiles 1 different forms and geometries (notches, tabs, shingles) which will characterize the finite product.

Subsequently to cutting, the tiles 1 of the monolayer type, thus obtained, can advantageously overlap each other, and be packed, for example by heat-shrinkable plastic films.

In other advantageous embodiments, such as for example those illustrated in figures 7 and 8, the method according to the finding comprises, just after the second accumulating step, the step of obtaining single tiles 1 of the so-called "double-layer" type; such step firstly provides a cutting step wherein the support layer 2, covered with the desired bituminous layers and with the grit 13, and possibly with the adhesive bituminous layer and with the non-stick layer 16, is subjected to a cut, so as to obtain one or more first bands 29a, having a substantially rectangular or square full-section (that is without holes or openings) shape, and one or more second bands 29b, whose envelope, in a plan view, preferably has a rectangular or square shape, and on which, starting from a longitudinal edge 30 of the same, through openings 31, with a preferably rectangular, square, or trapezoid plan (which can or cannot have all the same shape), two-by-two spaced from each other, are obtained, between which teeth 310 are defined.

Preferably, the through openings 31 affect the second band 29b for about half of its transverse extension (that is perpendicular to an axis 150, longitudinal to the unwinding direction of the support layer 2).

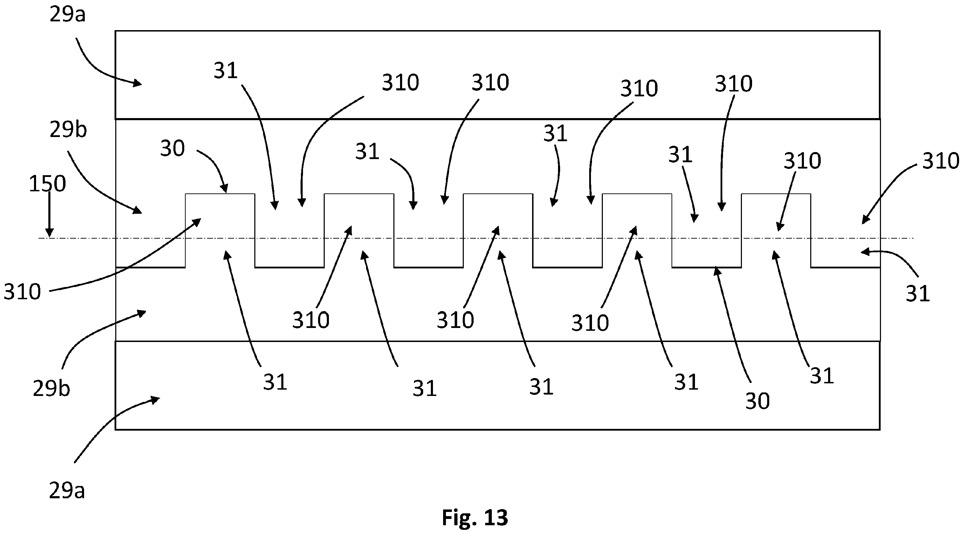

In advantageous embodiments, such as for example that illustrated in figure 13, in order to optimize the use of material, the cutting step provides to obtain two second bands 29b, specular, in a plan view, to each other, such that the teeth 310 of a second band 29b correspond to the through openings 31 of the other second band 29b, and vice versa; preferably, in such advantageous embodiments, the cutting step also provides to obtain two first bands 29a, whose transverse extension is advantageously equal to or greater than the extension in the transverse direction of the through openings 31.

Advantageously, the cutting step is formed by a cutting roller 32, provided in the production line 100, capable of making the division of the support layer 2, covered with the desired bituminous layers and with the grit 13, and possibly with the adhesive bituminous layer 15 and with the non-stick layer 16, in the one or more first bands 29a and one or more second bands 29b.

Advantageously, the step of obtaining single tiles 1 of the so-called "double-layer" type provides, after the cutting step, a step of applying, preferably by an applying roller 33, an adhesive bituminous compound, preferably in the form of strips, preferably parallel and more preferably equally spaced, to the face of a second band 29b opposed to that having the grit 13, and gluing such second band 29b on top of a first band 29a, preferably with the through openings 31 of the second band 29b overlapping the first band 29a.

In advantageous embodiments, if in the method according to the finding the adhesive bituminous layer 15 and the non-stick layer 16 were not applied, the method according to the finding can comprise, after fixing a second band 29b on a first band 29a, applying, by a specific applier 34, advantageously provided in the production line 100, second portions (or pads), not represented, of adhesive bitumen on the first external bituminous layer 9 of the second band 29b which the first band 29a overlaps; such second portions will allow the adhesion between two tiles 1 of the double-layer type, overlapping each other.

Advantageously, the step of obtaining single tiles 1 of the so-called "double-layer" type preferably provides, after the step of applying the second portions, a step of cooling the second portions, preferably by delivering air and/or a mixture of water and surface-active agents, so as to inhibit the adhesive power of such second portions when producing the tile 1; advantageously, such delivery can be made by dedicated third nozzles 35.

Advantageously, the step of obtaining single tiles 1 of the so-called "double-layer" type finally provides a step of cutting transversally to the advancing direction of the first band 29a and the related second band 29b overlapping it, advantageously by a second rotating cutter 36, comprising for example a second cutting cylinder 36a and a second counter-roller 36b.

Even in this case, subsequently to cutting, the tiles 1 of the "double-layer" type, thus obtained, can advantageously overlap each other, and be packed, for example by heat-shrinkable plastic films.

The tiles 1 according to the finding were subjected to a number of comparative tests, in order to verify their performance with respect to a known-type tile (also referred to as "traditional"), taken as a reference.

The traditional tile used in the tests to compare the performance of the tiles according to the finding is the "Top Shingle Rectangular" model tile produced by the company Tegola Canadese Srl.

The main tests to which the tiles were subjected are described in the following.

### Tensile-strength test according to EN 12311-1/EN544 standard

In this test, five samples sized 50 x 250 mm are taken from the tiles, both in the longitudinal direction (hereinafter "MD") and in the transverse direction (hereinafter "CMD"), and maintained for 20 hours at the temperature of 23°C. The test is performed on the single samples by a dynamometer, exerting a traction at a speed of 100 mm/min, at a temperature of 23±2°C. The maximum load which determines the breaking of the sample expressed in N/50 mm (breaking localized in the central section of the sample) is recorded.

The test results are reported in the following.
Traditional single-layer tile:
   maximum load MD: 800 N/50 mm
   maximum load CMD: 610 N/50 mm
Tile object of the finding of the single-layer type:
   maximum load MD: 1220 N/50 mm
   maximum load CMD: 950 N/50 mm

It can be seen that the tile according to the finding showed a much greater tensile strength than the known-type tile.

### Tensile-strength test (derogation to ASTM D4073-06 standard for bituminous membranes)

In this test, five suitably sized samples are taken from the tiles both in the longitudinal and the transverse direction and maintained for 72 hours at the temperature of 23°C. The test is performed on the single samples by a dynamometer, exerting a traction at a speed of 2.54 mm/min, at a temperature of 23±2°C. The maximum load which determines the breaking of the sample expressed in N is recorded.

The test results are reported in the following.
Traditional single-layer tile:
   maximum load MD: 412 N
   maximum load CMD: 328 N
Tile object of the finding of the single-layer type:
   maximum load MD: 710 N
   maximum load CMD: 670 N

It can be seen that the tile according to the finding showed a much greater tensile strength than the known-type tile.

### Tearing-strength test (not standard-setting)

A tile sample sized 200 x 200 mm is constrained to a wood supporting plane by nailing a side of the tile.

A side of the tile perpendicular to the constrained side is raised through pliers connected to the loading cell of a dynamometer, tilting the tile to an angle of 60° with respect to the supporting plane, with a speed of 100 mm/min until complete breakage of the sample (figure 2, tensile angle 60°). The maximum load (in N) required to tear the sample is recorded.

The test results are reported in the following.
Traditional single-layer tile:
   maximum load MD: 50 N
   maximum load CMD: 44 N
Tile object of the finding of the single-layer type:
   maximum load MD: 128 N
   maximum load CMD: 87 N

The tile according to the finding showed a much greater tearing-strength than the known-type tile.

### Lacerating-strength test (not standard-setting)

A 130mm-long cut is made, starting from the short side of the sample, to a rectangular tile sample sized 100 x 200 mm on the middle line of the same; one of the two tile portions separated by cutting is fixed to a fixed support, while the free end of the other portion is rotated by 180 degrees with respect to the fixed portion, and is then subjected to traction by a dynamometer.

Therefore, the average load required to lacerate the sample (in N) is recorded.

The test results are reported in the following.
Traditional single-layer tile:
   maximum load MD: 20 N
   maximum load CMD: 18 N
Tile object of the finding of the single-layer type:
   maximum load MD: 56 N
   maximum load CMD: 46 N

The tile according to the finding showed a much greater lacerating-strength than the known-type tile.

### Nail pull-through resistance test according to ASTM D3462 standard

Five tile samples, square and sized 98±3 mm x 98±3 mm, are taken and maintained for 2 hours at a temperature of 23±2°C.

Then, the samples are centrally drilled, starting from the surface of the sample having the grit, by a galvanized nail having length of 38 mm and head diameter equal to 9.5 mm; the nail head has to stop on the gritted surface. By a dedicated equipment and by using a dynamometer, a traction is exerted on the nail tip, moving the same at a speed of 100 mm/min, until the head of the nail itself passes through the sample. The force required to pass the nail head through the sample in N or LBF is recorded. The test is also carried out at the temperature of 0±2°C and 70±2°C (at 70°C in derogation to standard).

The test results are reported in the following.
Traditional single-layer tile at 23±2°C:
   required force: 21 LBF.
Tile object of the finding of the single-layer type at 23±2°C:
   required force: 35 LBF.
Traditional double-layer tile at 23±2°C:
   required force 32 LBF.
Tile object of the finding of the double-layer type at 23±2°C:
   required force: 59 LBF.
Traditional single-layer tile at 0±2°C:
   required force: 24 LBF.
Tile object of the finding of the single-layer type at 0±2°C:
   required force: 38 LBF.
Traditional double-layer tile at 0±2°C:
   required force: 42 LBF.
Tile object of the finding of the double-layer type at 0±2°C:
   required force: 115 LBF.
Traditional single-layer tile at 70±2°C:
   required force: 5 LBF.
Tile object of the finding of the single-layer type at 70±2°C:
   required force: 16 LBF.
Traditional double-layer tile at 70±2°C:
   required force: 19 LBF.
Tile object of the finding of the double-layer type at 70±2°C:
   required force: 29 LBF.

The tile according to the finding, both single-layer or double-layer, showed a greater nail-drilling strength than the known-type tile.

### Nail pull-through resistance test (derogation to ASTM D3462 standard)

In this test, a procedure similar to the above in conjunction with the nail-drilling strength according to ASTM D3462 standard is applied, with the only modification of the size of the diameter of the head of the nail used in the test (head diameter variable from 9.0 mm to 15.6 mm).

The test results are reported in the following.
Traditional single-layer tile:
   required force (head diam. 9 mm): 21 LBF.
   required force (head diam. 9.6 mm): 23 LBF.
   required force (head diam. 11.8 mm): 29 LBF.
   required force (head diam. 15.6 mm): 31 LBF.
Tile object of the finding of the single-layer type:
   required force (head diam. 9 mm): 35 LBF.
   required force (head diam. 9.6 mm): 46 LBF.
   required force (head diam. 11.8 mm): 49 LBF.
   required force (head diam. 15.6 mm): 51 LBF.

The tile according to the finding showed a much greater nail-drilling strength than the known-type tile.

### Brush-test according to ASTM D4977-89 standard

In this test, five rectangular tile samples (sized 277 mm x 70 mm) are taken from the exposed section of the same and subjected to 50 brushing cycles using stainless-steel bristles (equipment 3M according to ASTM D-4977-89 specification GRANULE EMDEBBING TEST MACHINE).

At the beginning and at the end of the test, the samples are weighed, and the percentages of lost grit and grit remained adhered to the support are determined.

The test results are reported in the following.
Traditional single-layer tile:
   before/after brushing weight difference: 0.28 g.
Tile object of the finding of the single-layer type:
   before/after brushing weight difference: 0.15 g.

The tile according to the finding, after brushing, maintained more grit than the known-type tile.

### Blistering test No. 1 (derogation EN544-2005, not standardized)

In this test, five "pitches" of a tile are maintained for 24 hours in water at a temperature of 23°C (±2°C). Then, they are placed in a stove at 90°C for 2 hours, and then immerged in a thermostatic bath at room temperature (about 23°C) for one minute. The pitches are delicately dried and 2 or 3 square samples sized 10 cm x 10 cm are cut out therefrom. For each sample, ten parallel strips having width of 1 cm are cut, and once positioned on top of each other, the presence of bubbles and their size (greater and smaller than 1 mm) are evaluated. The result is expressed as the ratio between number of bubbles present and number of bubbles greater than 1 mm.

The test results are reported in the following.
Traditional single-layer tile:
   21 bubbles of which 6 bubbles greater than 1 mm
Tile object of the finding of the single-layer type:
   6 bubbles, of which 1 bubble greater than 1 mm.

### Blistering test No. 2 (derogation EN544 with -10/+90°C thermal cycles)

In this test, five pitches of a tile are subjected to 10 thermal cycles consisting of 24 hours in water at a temperature of 23°C (±2°C), 12 hours at -10°C and 12 hours in a stove at 90°C.

If the samples do not show the appearance of surface bubbles/swellings, the blistering phenomenon has not occurred.

The samples subjected to test consist of intact pitches and torn/damaged pitches in order to cause the support to emerge from the bitumen.

The test results are reported in the following.
Traditional single-layer tile:
   minimum presence of blistering found.
Tile object of the finding of the single-layer type:
   presence of blistering not found.

### Water-absorbing test according to EN544 standard

In this test, five square tile samples (100±3 mm x 100±3 mm) are weighed and then placed inside a thermostated water bath at 23±2°C for 6 days. After such time range, the samples are dried in a stove for 1 hour at 50°C and then weighed. The percentage increase of the weight of each sample after such range is detected. The test results are reported in the following.
Traditional single-layer tile:
   Weight percentage increase 0.500%
Tile object of the finding of the single-layer type:
   Weight percentage increase 0.40%

### Water-permeability test (derogation to ASTM D7349/D7349M-15 standard for bituminous membranes)

In this test, ASTM D7349 standard with protocol No. 4 on single-layer and laminated tiles (72 hours, 4°C, 125 mm H2O) is applied and the water passage through the sample/wooden substrate evaluated.

The test results are reported in the following.
Traditional single-layer tile:
   Minimum water passage
Tile object of the finding of the single-layer type:
   No water passage.
Traditional double-layer tile:
   No water passage.
Tile object of the finding of the double-layer type:
   No water passage.

Therefore, it has been found that the finding solves the above-mentioned aim and objects, as the tile according to the finding, due to the presence of the net which covers at least 80%, more preferably 100%, of the first major surface of the base layer, optimally resists to the external stresses, and therefore has a reduced risk of breaking.

Indeed, the presence of the net increases the mechanical strength of the support layer, and improves its adhesion to the bituminous layers, reducing the risk of their separation.

Matching between the base layer and the net confers strength to the tile, such that, if subjected to external stresses (for example due to bending, storm, strong wind, etc.), it is capable of resisting to tearing.

Furthermore, especially in the possible nailing zone (that is the zone wherein possible nails are driven to fix the tile for example to a roof), the presence of the net, particularly in the case where the same is made of glass fiber, allows the nails head to remain engaged, and ensures that under such head there is enough material to resist to possible stresses.

Furthermore, the net increases the drilling strength of the tile in the laying step, thus preventing possible damages to the tile due, for example, to a too high pressure of a nails gun.

The extension of the net to cover at least 80%, more preferably 100%, of the first major surface of the base layer, facilitates the laying by nailing of the tile, as it provides the installer with a wide nailing zone (corresponding to the extension of the net) wherein the nail can be positioned.

Furthermore, the presence of the net only in the side of the support layer facing away from the grit (corresponding, in use, to the lower, and therefore non-visible, face of the tile), does not affect the aesthetical features of the tile, and further ensures that the net does not subtract (enclosing it between the meshes thereof) useful bituminous compound to the adhesion of the granules of the grit.

Furthermore, depending on the specific adopted advantageous embodiment, the tile according to the finding has one or more further advantages with respect to the bituminous tiles with known-type grit coating.

Particularly, possibly treating the support layer with the one or more adhesion promoters increases its compatibility with respect to the bituminous compound; due to such one or more adhesion promoters, the compound optimally diffuses and flows both through and in the interspaces between the fibers/filaments of the support layer, forming with the latter, once cooled, strong mechanical-nature bindings.

Such bindings prevent delamination phenomena between the bituminous compound and the support layer, even in case of deformation of the tile.

A greater interaction and compatibility between the support layer and the bitumen is also promoted by the possible polymeric binders used to couple the net with the base layer.

Furthermore, the presence of the support layer, advantageously comprising the base layer and the net, enclosed between the bituminous layers, ensures that the size and the mechanical strength of the tile are maintained over time, as such support layer is not directly exposed to the atmospheric agents.

Furthermore, possibly using a modified bituminous compound for pre-impregnating the support layer and obtaining the first and/or the second intermediate bituminous layers, promotes the compatibility of the support layer with the bitumen which forms the first and the second external bituminous layers.

The possible fluxes and the possible adhesion promoters comprised in the bitumen decrease its viscosity and promote the impregnation of the fibers of the support layer, creating strong bindings between the various components and preventing a possible delamination bitumen-support.

The presence of possible different bituminous compounds in the finite tile confers to the same more elastoplastic properties and a greater mechanical-stress and deformation strength; layering the bituminous layers allows to obtain a synergic effect between the single features of the various bituminous compounds.

The strong interactions between support layer and bituminous compounds do not allow the water/humidity to penetrate into the tile and cause degradation phenomena, such as blistering and/or delamination (an event which would occur if the support layer was not completely and firmly impregnated by the bituminous compound.

Furthermore, the method for making the tile is advantageously continuous, low-cost, and does not involve aesthetic variations in the finite product.

Furthermore, due to the use of the net matching to the base layer, glass veil layers having mass per unit area and thicknesses lower than the prior art, for example 80-125 g/m² to 30-50 g/m², can be used for the base layer.

Still, in the advantageous case of the bituminous single-layer tiles, when a tile is laid to partially cover another one of them, a strong and durable adhesion between the adhesive bituminous layer of the tile arranged on top and the possible "pads" of the tile arranged at the bottom occur, as the bituminous compound of the pads and that of the adhesive bituminous layer have a complete mixability/compatibility when heated: such effect determines the complete sealing and impermeabilization of the tiles fixed to each other, particularly in the case where a nail or other fixing element is driven centrally with respect to a paste.

Finally, it is clear that the tile and the method for forming it according to the finding, described here, are susceptible of a number of modifications or variants, all falling within the finding; furthermore, all the details are replaceable by technically equivalent elements without departing from the scope of the attached claims.

## Claims

1. Bituminous tile (1) with grit coating (13), **characterized by** comprising:
- a support layer (2) comprising a base layer (3) made of non-woven glass fiber fabric, having a first major surface (4) to which a glass fiber net (6) is coupled which covers at least 80% of said first major surface (4);
- a first external bituminous layer (9) covering said net (6) and said first major surface (4) ;
- a second external bituminous layer (10) which covers a second major surface (5) of said base layer (3), facing away from said first major surface (4);
- a grit (13) comprising ceramized colored mineral granules, which covers said second external bituminous layer (10).

2. Tile (1), as in claim 1, wherein between said first major surface (4) and said first external bituminous layer (9) a first intermediate bituminous layer (11) is interposed, having a different composition from that of said first external bituminous layer (9), which covers said first major surface (4) and said net (6) and is in turn covered by said first external bituminous layer (9).

3. Tile (1), as in claim 2, wherein said first intermediate bituminous layer (11) comprises oxidized bitumen or distilled bitumen modified with polymers, one or more fluxes/plasticizers, one or more adhesion promoters and one or more mineral fillers.

4. Tile (1), as in one or more of the preceding claims, wherein between said second major surface (5) and said second external bituminous layer (10) a second intermediate bituminous layer (12) is interposed, having a different composition from that of said second external bituminous layer (10), which covers said second major surface (5) and is in turn covered by said second external bituminous layer (10) .

5. Tile (1), as in claim 4, wherein said second intermediate bituminous layer (12) comprises oxidized bitumen or distilled bitumen modified with polymers, one or more fluxes/plasticizers, one or more adhesion promoters and one or more mineral fillers.

6. Tile (1), as in one or more of the preceding claims, wherein said first external bituminous layer (9) and said second external bituminous layer (10) comprise oxidized bitumen or distilled bitumen modified with polymers, one or more fluxes/plasticizers, one or more adhesion promoters and one or more mineral fillers.

7. Tile (1), as in one or more of the preceding claims, wherein said net (6) covers the entire surface of said first major surface (4).

8. Tile (1) as in one or more of the preceding claims, wherein said base layer (3) of non-woven glass fiber fabric has, in a plan view, a substantially rectangular or square shape, wherein said net (6) has square or rectangular meshes (8), and wherein the sides of said base layer (3) are neither parallel nor perpendicular to the sides of said meshes (8) of said net (6).

9. Tile (1), as in one or more of the preceding claims, comprising one or more first portions (14) of adhesive bituminous compound applied on top of said second external bituminous layer (10), covered with said grit (13), suitable to glue to the bottom of a further tile (1) positioned on top of said second external bituminous layer (10), covered with said grit (13), on which said one or more first portions (14) are present.

10. Method for the production of a bituminous tile (1) with grit coating (13), **characterized by** comprising, in the following order, the following steps:
a) providing a support layer (2) comprising a base layer (3) made of non-woven glass fiber fabric, having a first major surface (4), to which a glass fiber net (6) is coupled which covers at least 80% of said first major surface (4), and a second major surface (5) facing away from said first major surface (4) ;
b) impregnating said support layer (2) with a hydrocarbon solution comprising adhesion promoters, at a temperature comprised between 120-180°C;
c) covering said support layer (3), impregnated with said hydrocarbon solution comprising adhesion promoters, with a non-adhesive bituminous compound, at a temperature comprised between 170-210°C, to define a first external bituminous layer (9) which covers said net (6) and said first major surface (4), and a second external bituminous layer (10) which covers said second major surface (5);
d) depositing a grit (13) containing ceramic colored mineral granules on said second external bituminous layer (10), when the same has a temperature comprised between 120-170°C;
e) cutting said support layer (2) covered with said first and second external bituminous layers (9, 10) and with said grit (13) to obtain from it a desired number of tiles (1).

11. Method, as in claim 10 comprising, between said step b) and said step c), the following step:
b1) pre-impregnating said support layer (3), impregnated with said hydrocarbon solution comprising adhesion promoters, with a modified bituminous compound, at a temperature comprised between 170-200°C, to define a first intermediate bituminous layer (11), which covers said first major surface (4) and said net (6) and is then covered by said first external bituminous layer (9) in said step c), and a second intermediate bituminous layer (12), which covers said second major surface (5) and is then covered by said second external bituminous layer (10) in said step c).

12. Method, as in claim 10 or 11, comprising, after said step c) and before said step e), the following step:
f) applying an adhesive bituminous compound on top of said first external bituminous layer (9), to form an adhesive bituminous layer (15).

13. Method, as in claim 12, comprising, after said step f) and before said step e), the following step:
f2) applying on said adhesive bituminous layer (15) a non-stick layer (16), which at least partially covers said adhesive bituminous layer (15), on the opposite side to said support layer (2).

14. Method, as in claim 10, 11 or 12 or 13, comprising, after said step d) and before said step e), the following step:
d1) applying, on top of said second external bituminous layer (10) covered with said grit (13), one or more first portions (14) of adhesive bituminous compound.
